(19) Europäisches Patentamt
European Patent Office
Office européen des brevets

(11) **EP 1 542 890 B1**

(12) **EUROPÄISCHE PATENTSCHRIFT**

(45) Veröffentlichungstag und Bekanntmachung des Hinweises auf die Patenterteilung:
**03.06.2009  Patentblatt 2009/23**

(21) Anmeldenummer: 03798038.0

(22) Anmeldetag: **18.03.2003**

(51) Int Cl.:
*B60T 8/00* (2006.01)      *B60T 8/26* (2006.01)
*B60R 21/01* (2006.01)      *G01G 19/414* (2006.01)

(86) Internationale Anmeldenummer:
**PCT/DE2003/000875**

(87) Internationale Veröffentlichungsnummer:
**WO 2004/028877 (08.04.2004 Gazette 2004/15)**

(54) **VORRICHTUNG ZUR BESTIMMUNG EINER GESAMTMASSE EINES FAHRZEUGS**

DEVICE FOR DETERMINING THE OVERALL MASS OF A VEHICLE

DISPOSITIF POUR DETERMINER LA MASSE GLOBALE D'UN VEHICULE

(84) Benannte Vertragsstaaten:
**DE FR GB**

(30) Priorität: **19.09.2002   DE 10243516**

(43) Veröffentlichungstag der Anmeldung:
**22.06.2005   Patentblatt 2005/25**

(73) Patentinhaber: **ROBERT BOSCH GMBH**
**70442 Stuttgart (DE)**

(72) Erfinder:
• **MACK, Frank**
  **70376 Stuttgart (DE)**
• **LICH, Thomas**
  **71409 Schwaikheim (DE)**

(56) Entgegenhaltungen:
**DE-A- 3 723 916**

EP 1 542 890 B1

**Beschreibung**

Stand der Technik

Die Erfindung geht aus von einer Vorrichtung zur Bestimmung einer Gesamtmasse eines Fahrzeugs nach der Gattung des unabhängigen Patentanspruchs.

Aus DE 198 40 440 A1 ist es bekannt, die abgespeicherte Fahrzeugmasse bei der Steuerung eines Insassenschutzmittels zu berücksichtigen. Aus DE 44 09 711 A1 ist es bekannt, mit einem Lastsensor das tatsächliche Gewicht eines Fahrzeugs zu ermitteln. Dieses Gewicht wird mit einem Sollwert verglichen und in Abhängigkeit davon wird ein Signal erzeugt, das in einer Auswerteeinrichtung für Rückhaltemittel berücksichtigt wird.

Nachteilig an der in DE 44 09 711 A1 vorgestellten Lösung ist, dass der Lastsensor schwer zu realisieren ist und erhebliche bauliche Maßnahmen zu seinem Einsatz am Fahrzeug erfordert.

Aufgabe der Erfindung ist es daher, eine Vorrichtung zur Bestimmung der Gesamtmasse eines Fahrzeugs zu schaffen, die erheblich einfacher realisierbar ist.

Aus DE 37 23 916 A ist es bekannt, gemäss dem Oberbegriff des Anspruchs 1, dass bei einem stehenden Fahrzeug Sensoren vorhanden sein können, in denen das Gesamtgewicht des Fahrzeugs erkennbar ist. Damit kann dann in einer sehr guten Näherung die tatsächlich geltende ideale Bremskraftverteilung entsprechende einer Parabel berechnet werden.

Vorteile der Erfindung

Die erfindungsgemäße Vorrichtung zur Bestimmung einer Gesamtmasse eines Fahrzeugs mit den Merkmalen des unabhängigen Patentanspruchs hat demgegenüber den Vorteil, dass durch eine bereits vorhandene Innenraumsensierung und weitere Gewichtssensoren, die im Fahrzeug zur Erfassung von Beladungen vorgesehen sind sowie einem abgespeicherten Wert über das Leergewicht des Fahrzeugs eine einfache und genaue Gesamtmassenbestimmung möglich ist. Diese Gesamtmasse kann dann weiteren Fahrzeugsystemen als Parameter zur Verfügung gestellt werden.

Es ist vorteilhaft ist, dass die verteilten Gewichtssensoren zur Ermittlung eines jeweiligen Gewichts eines jeweiligen Insassen und einer Zuladung konfiguriert sind, wobei die Vorrichtung Mittel zur Bestimmung einer Masse aus einem Gewicht aufweist. Damit ist insbesondere die Möglichkeit geschaffen, auch den Massenschwerpunkt zu ermitteln.

Durch die in den abhängigen Ansprüchen aufgeführten Maßnahmen und Weiterbildungen sind vorteilhafte Verbesserungen der im unabhängigen Patentanspruch angegebenen Vorrichtung zur Bestimmung einer Gesamtmasse eines Fahrzeugs möglich.

Darüber hinaus ist es von Vorteil, dass die verteilten Gewichtssensoren in den Sitzen und an einer Ladefläche, beispielsweise dem Kofferraumboden oder dem Dachgepäckträger, angeordnet sind. Damit ist eine sehr genaue Bestimmung der Gesamtmasse und auch des Massenschwerpunkts möglich.

Weiterhin ist es von Vorteil, dass dieser Massenwert mit einer Relativgeschwindigkeit, die mittels einer Precrashsensorik ermittelt wird, eines Objekts verknüpft wird, um die kinetische Energie bei einem Aufprall zu bestimmen. Dieser Wert ist für Fahrzeugsysteme wie das Rückhaltesystem, die Fahrdynamik oder dem Bremssystem von großer Bedeutung und kann zur Milderung eines Aufpralls verwendet werden. Damit ist insbesondere ein situationsangepasster Einsatz dieser Fahrzeugsysteme möglich.

Zeichnung

Ausführungsbeispiele der Erfindung sind in der Zeichnung dargestellt und werden in der nachfolgenden Beschreibung näher erläutert.

Es zeigen

Figur 1     ein Blockschaltbild der erfindungsgemäßen Vorrichtung im Fahrzeug,

Figur 2     ein Flussdiagramm des Ablaufs der auf der erfindungsgemäßen Vorrichtung geschieht und

Figur 3     ein Blockschaltbild der erfindungsgemäßen Vorrichtung.

Beschreibung

Seit der Einführung des Beifahrerairbags werden im Zug der Weiterentwicklung von Rückhaltesystemen Sensoren sowie Verfahren im Innenraum aufgebaut, die eine Klassifizierung der Personen durchführen sollen. Im Wesentlichen zielen diese Systeme darauf ab, den Beifahrer in Abhängigkeit seiner Masse entsprechend im Falle eines Aufpralls zu schützen. Hierzu werden zukünftig verschiedene Systeme verfügbar sein, die die Masse des Insassen messen oder gegebenenfalls schätzen. Andere Verfahren zur Überwachung des Innenraums werden mit Hilfe von Videokameras oder Ultraschallsensorik aufgebaut.

Zur Bestimmung der Gesamtmasse eines Fahrzeugs existieren verschiedene Verfahren, die basierend auf dem Reifendruck eine Schätzung der Gesamtmasse durchführen, sowie Verfahren, die über die Federungseigenschaften die Totalmasse schätzen.

Erfindungsgemäß wird nun eine Vorrichtung vorgestellt, die einfacher die Gesamtmasse des Fahrzeugs bestimmt. Dabei wird insbesondere und vorzugsweise die zukünftige Innenraumsensorik eingesetzt, um die Gesamtmasse zu bestimmen. Dabei werden ein abgespeicherter Wert über die Leermasse des Fahrzeugs und ermittelte Werte über die Zuladung des Fahrzeugs addiert, um die Gesamtmasse des Fahrzeugs zu bestimmen. Dabei werden beispielsweise für die Insassen Gewichtssysteme verwendet, die die Masse oder das Gewicht absolut bestimmen. Es wird als durch einfache Summation der Einzelmassen und anschließende Addition zum Leergewicht, die Gesamtmasse bestimmt.

Eine weitere verbesserte Berechnung kann gegebenenfalls erzielt werden, wenn der Kofferraum und/ oder der Gepäckträger ebenfalls mit zusätzlichen Gewichtssensoren versehen wird. Die Messung der Masse am Gepäckträger kann zum Beispiel über vier Unterlagsscheiben am Fahrzeug erfolgen, oder aber durch die Verwendung von vier Kraftmessbolzen. Die Bestimmung im Kofferraum kann beispielsweise über eine Drucksensorfolie erfolgen, welche im Kofferraum entsprechend verteilt wird.

Dadurch erhält man das genaue gemessene Gesamtgewicht des Fahrzeugs mit Insassen und Gepäck.

Der daraus resultierende Vorteil ergibt sich im Falle eines Unfalles. Dort spielt auf Grund der auftretenden kinetischen Energie die Masse eine wichtige Rolle. Die kinetische Energie berechnet sich aus:

$$E = \frac{1}{2} \cdot m \cdot v^2$$

wobei hier m die Gesamtmasse des Fahrzeugs in Kilogramm und v die Geschwindigkeit des Fahrzeugs bzw. Differenzgeschwindigkeit zum Aufprallobjekt in Metern pro Sekunde ist.

Wie oben bereits beschrieben, wurde die Gesamtmasse des Fahrzeugs ermittelt und über eine Precrashsensorik erhält man die relative Geschwindigkeit des Fahrzeugs während der Fahrt zu einem anderen Objekt. Dies ist ein weiterer Eingangsparameter in die Auswerteelektronik zur Bestimmung der kinetischen Energie.

Unter Berücksichtigung der Gesamtmasse kann gegebenenfalls eine gezielte Auslösestrategie der Rückhaltesysteme entwickelt werden. Ein weiterer Vorteil ergibt sich zur Bestimmung des Masseschwerpunktes des Fahrzeugs. Da auf Grund der unterschiedlichen Informationen die Verteilung der Masse im Fahrzeug bekannt ist, kann auch der Schwerpunkt des Fahrzeugs besser ermittelt werden. Dies ist neben dem klassischen Crash für Roll-Over-Situationen entscheidend, um das Kippverhalten des Fahrzeugs genauer bestimmen zu können und im entscheidenden Moment die Kopfairbags zu zünden.

Neben dem Crashverhalten können auch andere Systeme diese Informationen verwenden. Hierzu zählen zur Verbesserung der fahrdynamischen Eigenschaften bzw. des Bremsverhaltens Systeme wie ABS, ASR, ESP oder der Bremsassistent.

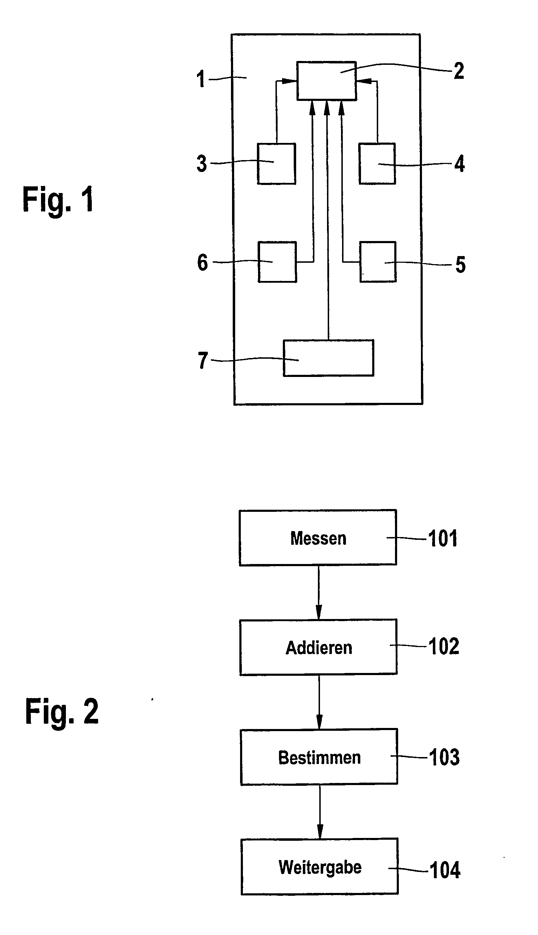

Figur 1 zeigt in einem Blockschaltbild die erfindungsgemäße Vorrichtung. In einem Fahrzeug 1 befindet sich eine Auswerteeinheit 2, an die über jeweilige Dateneingänge Gewichtssensoren 3, 4, 5, 6 und 7 angeschlossen sind. Die Gewichtssensoren 3, 4, 5 und 6 sind für Insassenplätze vorgesehen, um das Gewicht der jeweiligen Insassen gegebenenfalls zu ermitteln. Der Gewichtssensor 7 dient dazu, das Gewicht vom Gepäck oder anderen Lagergegenständen zu erfassen. Es können weit mehr, als die hier dargestellten Gewichtssensoren verwendet werden. Beispielsweise kann auch ein Gewichtssensor für einen Dachgepäckträger vorgesehen sein, der durch entsprechende Unterlagsscheiben realisiert ist.

Die Auswerteeinheit 2 verarbeitet die Daten der Gewichtssensoren 3 bis 7 und bestimmt daraus einen Gesamtmassewert. Dieser Gesamtmassewert wird mit einer Leermasse des Fahrzeugs addiert, um die Gesamtmasse des Fahrzeugs zu bestimmen. Das Leergewicht oder die Leermasse des Fahrzeugs ist in der Auswerteeinheit 2 in einem Speicher fest abgelegt. Die Gesamtmasse kann dann als Parameter für andere Fahrzeugsysteme verwendet werden. Beispielsweise kann aus der Gesamtmasse in Verbindung mit einer Relativgeschwindigkeit zu einem Aufprallobjekt die kinetische Energie im Aufprall berechnet werden, die für Rückhaltesysteme, Bremssysteme und Fahrdynamiksysteme wichtig ist, um dem Insassen einen möglichst optimalen Schutz zu bieten.

Figur 2 zeigt in einem Flussdiagramm den Ablauf der erfindungsgemäßen Vorrichtung. Bei Verfahrensschritt 101 messen die Gewichtssensoren 3 bis 7 das Gewicht, das auf sie ausgeübt wird. Bei Verfahrensschritt 102 führt die Auswerteeinheit 2 eine Addition der Gewichte durch, die durch die Gewichtssensoren 3 bis 7 bestimmt wurden und bestimmt daraus die entsprechende Masse. In Verfahrensschritt 103 lädt nun die Auswerteeinheit 2 aus einem Speicher das Leergewicht bzw. die Leermasse des Fahrzeugs 1 und addiert dies zu dem gemessenen Gesamtgewicht hinzu, um die Gesamtmasse des Fahrzeugs 1 mit Ladung und Insassen zu bestimmen. Dieser Wert wird dann in Verfahrensschritt 104 an weitere Fahrzeugsysteme weitergegeben, um die Funktionen dieser Fahrzeugsysteme zu optimieren.

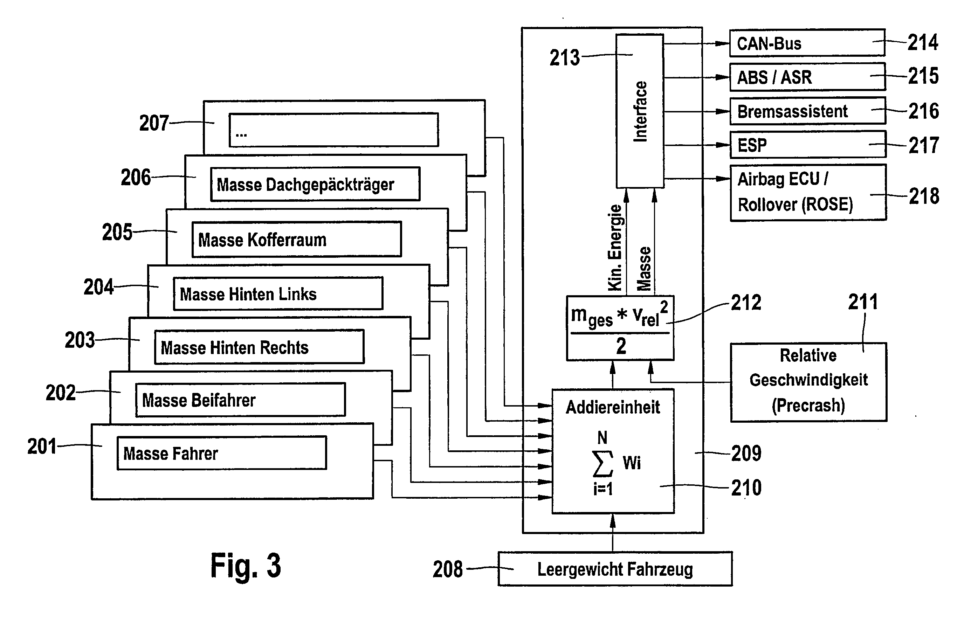

Figur 3 zeigt in einem Blockdiagramm die erfindungsgemäße Vorrichtung. An einer Auswerteeinheit 209, die die gemessenen Gewichtswerte aufsummiert, sind die Sensoren 201 bis 207 über jeweilige Dateneingänge angeschlossen. Dabei ermittelt der Sensor 201 die Masse des Fahrers, der Sensor 202 die Masse des Beifahrers, der Sensor 203 die Masse des Beifahrers hinten rechts, der Sensor 204 die Masse des Beifahrers hinten links, der Sensor 205 die Masse des Ladegewichts im Kofferraum, der Sensor 206 die Masse der Last, die auf dem Dachgepäckträger aufgebracht ist und der Sensor 207 kann für weitere Orte im Fahrzeug eingesetzt werden, wo eine Last oder ein Insasse aufgebracht werden kann, beispielsweise in der Mitte im Fonds.

Die Addiereinheit 209 hat über einen weiteren Eingang 208 Anschluss zu einem Speicher 209, in dem das Leergewicht des Fahrzeugs abgelegt ist. Die Addiereinheit 210, eine weitere Berechnungseinheit 212 und eine Schnittstelle 213 befinden sich in einem Fahrzeugsystem 209, das hier die Auswertung durchführt. Die Addiereinheit 210 übergibt den aufaddierten Wert an die Berechnungseinheit 212, an die auch eine Precrashsensorik 211 angeschlossen ist. Die Precrashsensorik 211 liefert an die Berechnungseinheit 212 die Relativgeschwindigkeit zu einem Objekt, mit dem ein Aufprall stattfinden kann. Aus der Gesamtmasse und der Relativgeschwindigkeit berechnet die Berechnungseinheit 212 die kinetische Energie, die bei einem Aufprall mit dem jeweiligen Objekt zu Einsatz kommen würde. Es ist möglich, dass die Berechnungseinheit 212 bzw. die Addiereinheit 210 in einem jeweiligen Fahrzeugsystem integriert ist. Die Berechnungseinheit 212 übergibt dann der Schnittstelle 213 die Werte für die kinetische Energie und die Masse, die die Schnittstelle beispielsweise über einen CAN-Bus 214 an weitere Fahrzeugsysteme verteilt. Zu diesen weiteren Fahrzeugsystemen gehören ABS bzw. ASR, Bremsassistent, ESP oder ein Rückhaltesystem 218. Die Systeme 215 bis 218 können entweder über den CAN-Bus 214 oder über jeweilige Zweidrahtleitungen mit dem Interface 213 verbunden sein.

**Patentansprüche**

1. Vorrichtung zur Bestimmung einer Gesamtmasse eines Fahrzeugs (1), wobei die Vorrichtung zur Bestimmung der Gesamtmasse eines Fahrzeugs (1) konfiguriert ist, wobei die Vorrichtung verteilte Gewichtssensoren (3 bis 7) zur Ermittlung einer Lademasse und einen Speicher (208) zur Ausgabe der Leermasse des Fahrzeugs (1) aufweist und wobei die Vorrichtung zur Weitergabe eines Werts für die Gesamtmasse an wenigstens ein weiteres Fahrzeugsystem (214 bis 218) konfiguriert ist, **dadurch gekennzeichnet, dass** die verteilten Gewichtssensoren (3 bis 7) zur Ermittlung eines jeweiligen Gewichts eines jeweiligen Insassens und einer Zuladung konfiguriert sind, wobei die Vorrichtung Mittel (209) zur Bestimmung einer Masse aus einem Gewicht aufweist.

2. Vorrichtung nach Anspruch 1, **dadurch gekennzeichnet, dass** die verteilten Gewichtssensoren (3 bis 7) in den Sitzen und an einer Ladefläche angeordnet sind.

3. Vorrichtung nach Anspruch 2, **dadurch gekennzeichnet, dass** die Ladefläche im Kofferraum angeordnet ist und/oder durch einen Dachgepäckträger verwirklicht ist.

4. Vorrichtung nach einem der vorherigen Ansprüche, **dadurch gekennzeichnet, dass** das wenigstens eine Fahrzeugsystem mit einer Precrashsensorik verbindbar ist, wobei das wenigstens eine Fahrzeugsystem zur Bestimmung einer kinetischen Energie aus der Gesamtmasse und einem Wert für die Relativgeschwindigkeit zwischen dem Fahrzeug und einem weiteren Objekt konfiguriert ist.

5. Vorrichtung nach Anspruch 4, **dadurch gekennzeichnet, dass** das wenigstens eine Fahrzeugsystem (209) die kinetische Energie und/oder die Gesamtmasse an ein Bremssystem (215, 216) und/oder eine Fahrdynamikregelung (217) und/oder ein Rückhaltesystem (218) weitergibt.

6. Vorrichtung nach einem der vorhergehenden Ansprüche, **dadurch gekennzeichnet, dass** die Vorrichtung zur Bestimmung des Masseschwerpunkts konfiguriert ist, wobei der Masseschwerpunkt dem wenigstens einen Fahrzeugsystem zugänglich ist.

**Claims**

1. Device for determining an overall mass of a vehicle (1), wherein the device is configured to determine the overall mass of a vehicle (1), wherein the device has distributed weight sensors (3 to 7) for detecting a load mass and a memory (208) for outputting the unladen mass of the vehicle (1), and wherein the device is configured to pass on a value for the overall mass to at least one further vehicle system (214 to 218), **characterized in that** the distributed weight sensors (3 to 7) are configured to detect a respective weight of a respective vehicle occupant and of a cargo, wherein the device has means (209) for determining a mass from a weight.

2. Device according to Claim 1, **characterized in that** the distributed weight sensors (3 to 7) are arranged in the seats and on a loading surface.

3. Device according to Claim 2, **characterized in that** the loading surface is arranged in the boot and/or is implemented by means of a roof rack.

4. Device according to one of the preceding claims, **characterized in that** the at least one vehicle system can be connected to a precrash sensor system, wherein the at least one vehicle system is configured to determine a kinetic energy level from the overall mass and from a value of the relative speed between the vehicle and a further object.

5. Device according to Claim 4, **characterized in that** the at least one vehicle system (209) passes on the kinetic energy level and/or the overall mass to a brake system (215, 216) and/or a vehicle movement dynamics controller (217) and/or a restraint system (218).

**6.** Device according to one of the preceding claims, **characterized in that** the device is configured to determine a centre of mass, wherein the centre of mass is accessible to the at least one vehicle system.

## Revendications

**1.** Dispositif de détermination de la masse totale d'un véhicule (1), le dispositif étant configuré pour déterminer la, masse totale du véhicule (1), le dispositif présentant des détecteurs de poids (3 à 7) répartis qui déterminent la masse du chargement et une mémoire (208) qui délivre la masse à vide du véhicule (1), le dispositif étant configuré pour transmettre une valeur de la masse totale à au moins un autre système (214 à 218) du véhicule,
**caractérisé en ce que**
les détecteurs de poids (3 à 7) répartis sont configurés pour déterminer le poids de chaque passager et d'un chargement supplémentaire, et **en ce que** le dispositif présente des moyens (209) de détermination d'une masse à partir d'un poids.

**2.** Dispositif selon la revendication 1, **caractérisé en ce que** les détecteurs de poids (3 à 7) répartis sont disposés dans les sièges et sur une surface de chargement.

**3.** Dispositif selon la revendication 2, **caractérisé en ce que** la surface de chargement est disposée dans le coffre et/ou est réalisée sous la forme d'un support de bagage disposé sur le toit.

**4.** Dispositif selon les revendications précédentes, **caractérisé en ce que** le ou les systèmes du véhicule peuvent être reliés à un système de détection précoce d'accident, le ou les systèmes du véhicule étant configurés pour déterminer une énergie cinétique à partir de la masse totale et d'une valeur de la vitesse relative entre le véhicule et un autre objet.

**5.** Dispositif selon la revendication 4, **caractérisé en ce que** le ou les systèmes (209) du véhicule transmettent l'énergie cinétique et/ou la masse totale à un système de freinage (215, 216) et/ou à une régulation (217) de la dynamique de roulage et/ou à un système de retenue (218).

**6.** Dispositif selon l'une des revendications précédentes, **caractérisé en ce que** le dispositif est configuré pour déterminer le barycentre, le barycentre étant accessible à au moins un système du véhicule.

**Fig. 1**

**Fig. 2**

| Messen | —101 |
| Addieren | —102 |
| Bestimmen | —103 |
| Weitergabe | —104 |

EP 1 542 890 B1

**Fig. 3**

- 207 — ...
- 206 — Masse Dachgepäckträger
- 205 — Masse Kofferraum
- 204 — Masse Hinten Links
- 203 — Masse Hinten Rechts
- 202 — Masse Beifahrer
- 201 — Masse Fahrer

213 — Interface

- CAN-Bus — 214
- ABS / ASR — 215
- Bremsassistent — 216
- ESP — 217
- Airbag ECU / Rollover (ROSE) — 218

Kin. Energie    Masse

$$\frac{m_{ges} * v_{rel}^2}{2}$$ — 212

211 — Relative Geschwindigkeit (Precrash)

Addiereinheit

$$\sum_{i=1}^{N} Wi$$

209
210

208 — Leergewicht Fahrzeug

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19840440 A1
- DE 4409711 A1
- DE 3723916 A